# EUROPEAN PATENT APPLICATION

(11) **EP 4 564 201 A1**
(43) Date of publication of application: **04.06.2025**
(21) Application number: 23307107.5
(22) Date of filing: 30.11.2023
(51) Int. Cl.: G06F 21/31, G06F 21/62, G06F 21/64, G06Q 20/36, H04L 9/40

(54) **UNIQUE VIRTUAL IDENTITY CREATION ENABLING BANISHMENT**

(71) Applicant: THALES DIS FRANCE SAS, 92190 Meudon (FR)
(72) Inventor: DOMBRES, Sophie, 13012 Marseille (FR); ZEAMARI, Ali, 13013 Marseille (FR); PAULIAC, Mireille, 13470 Carnoux en Provence (FR); LALUS, Julie, 13124 Peypin (FR); NEU, Paul-Emile, 83720 Trans en Provence (FR); LE CLECH, Yohann, 13600 Ceyreste (FR)
(74) Representative: Lotaut, Yacine Diaw

(57) **Abstract**

The present invention relates to a method to create and manage a unique virtual identity, called ID-token, for a user, said ID-token being to be used to know a status of the user across different virtual environments managed by different operators where the user has diverse identifiers.

## Description

### FIELD OF THE INVENTION

The present invention relates to a method to create and manage a unique virtual identity, called ID-token, for a user, said ID-token being to be used across different virtual environments managed by different operators. In particular the method of the invention enables to banish the unique virtual identity.

### BACKGROUND OF THE INVENTION

In social networks and virtual environments like, among others, metaverse and online games, a user can create several virtual identities. Under one virtual identity, the user can have injurious words and behaviors without being identified by the virtual environment.

The solution that is currently used is typically a closure of the account of the user. There is no further consequence for future access to this virtual environment by this user.

Indeed, this user can create a new virtual identity to continue accessing the virtual environment without any problem, and continue behaving hatefully. The virtual environment has no means to prevent this impunity and cannot banish this user.

Further alternative and advantageous solutions would, accordingly, be desirable in the art.

### SUMMARY OF THE INVENTION

The present invention aims at enabling a multi-platform banishment of a user via a specific creation of a unique virtual identity.

The present invention is defined, in its broadest sense, as a method to create and manage a unique virtual identity, called ID-token, for a user, said ID-token being to be used to know a status of the user across different virtual environments managed by different operators where the user has diverse identifiers, said method comprising the steps of, for a trusted party:
- receiving personal identity data from the user;
- verifying said personal identity data;
- selecting parameters from the personal identity data of the user;
- calculating the ID-token from selected parameters, said ID-token being a proof of ownership of the data and having metadata necessary to verify the user's status on the different virtual environments;
- linking a unique identifier/virtual identity to the ID-token
- linking a smart contract to the ID-token to define the ID-token in its entirety as not duplicable, transferable, or modifiable by anyone who is not trusted, said smart contract comprising functions for transferring ownership and managing the ID-token's data;
- recording the ID-token and the smart contract as transactions in a blockchain relative to the creation of the ID-token, said blockchain being accessible to the different operators of virtual environments;
- transferring, in a user's secure storage having the ability to receive and store this information and to prove the ID-token ownership under request of authenticated operators thanks to a cryptographic scheme, an information on the creation of the ID-token linked to the blockchain transaction;
said method further comprising the steps of, for at least one operator of a virtual environment:
- managing a banishment list of banished ID-tokens, said banishment list being shared by several virtual environments and/or shared with several operators of a virtual environment;
- receiving a request to register to the virtual environment from the user, said request comprising at least the information on the creation of the ID-token;
- using said information, reading the blockchain transaction;
- checking the presence of the read ID-token in the banishment list;
- authorizing or refusing the registration to the virtual environment accordingly.

The invention consists in creating for a given person, i.e. a user, a unique virtual identity, named ID-token, which could be used across different virtual environments, e.g. metaverse. This unique virtual identity is based on elements of the real identity of the person, i.e. civil status and must be unique in the world. This ID-token can be checked by different virtual environments. In order to meet this objective, the solution relies on blockchain and wallet technologies. Additionally, to prevent leakage of personal information, the solution relies on a third party to securely generate the virtual identity. The third party is also a legitimate entity to request and verify personal data information, i.e. elements of the real identity...

The solution of the invention enables to banish users from virtual environments by enabling each service provider having access to the blockchain to banish from his environment, i.e. social network, metaverse, a user, whatever his profile/avatar. It solves the problem of impunity on social networks and virtual environments.

According to an advantageous feature, the ID-token is specified with a given list of parameters and given cryptographic functions.

This feature guarantees the unicity of the ID-token across different virtual environments and blockchains as each virtual identity is calculated on the same basis for all users. It also enables to recover all the same parameters but for each user as soon as the function used to calculate the virtual identity tokens is reversible.

Advantageously, the secure storage is chosen among the followings: a pre-existing digital wallet of the user, a dedicated digital wallet created for the management of the ID-token, a user's secure area in the cloud.

Such secure storages solutions, typically solutions known under the generic terms "digital wallet" are known to provide characteristics necessary for the implementation of the invention.

Digital wallets are known to allow third parties to access user data, her the ID-token for the need of the invention, in a secured way and after authentication. Such solutions enable the user to prove his/her ownership and the third parties to access to public information of the user once they are authenticated. More precisely, the digital wallet solutions have the ability of receiving and storing information relative to the ID-token. Digital wallet as besides defined also have the ability to prove the ownership of the ID-token thanks to a signature system involving private keys and public keys.

Different types of digital wallet solutions exist, i.e. hardware or software, and it offers the ability for users to choose the type of wallet. They offer the ability to verify the ID-token content by its ability to interface with the blockchain.

According to an advantageous feature, the blockchain transaction further includes information for who, when and by who the ID-token was created.

The feature enables to keep a trace of the historic of the creation of ID-token but also all the modifications made to the ID-token during its life cycle.

According to another advantageous feature, the calculation step implements a cryptographic function applied to the selected parameters.

This feature enables to secure the calculation of the unique virtual identity and to ensure the uniqueness of the ID-token as soon as the selected parameters are diverse. Many known cryptography functions may be used.

Advantageously, the calculation step is reversible enabling to retrieve the selected parameters.

The reversibility of the calculation of the virtual identity token enables to retrieve the parameters used for the calculation which enables authorities to access to the identity of a user while knowing the ID-token.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the creation of an identity token of the invention;
- Figure 2 illustrates the registration to a virtual environment according to the invention;
- Figure 3 illustrates the derivation of a user profile from the identity token of the invention.

### DETAILED DESCRIPTION OF EMBODIMENTS OF THE INVENTION

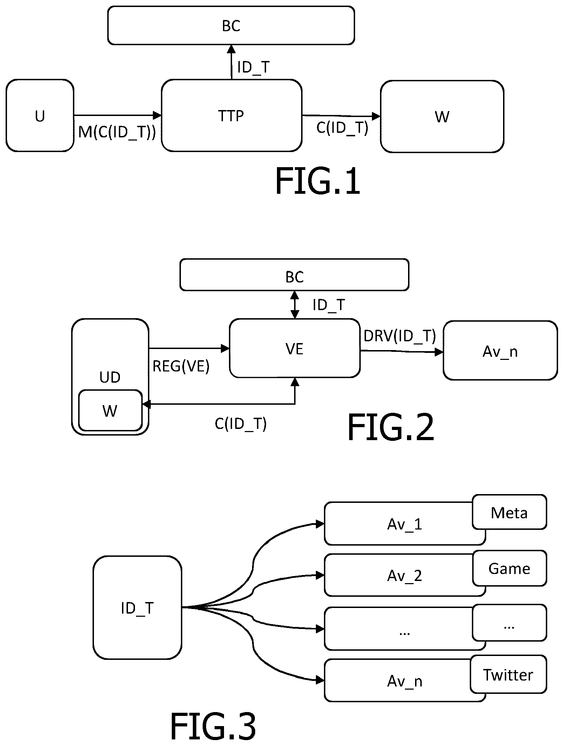

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described. Figure 1 illustrates the creation of an identity token of the invention. A user first connects to a trusted third-party platform TTP and create an account in order to obtain a unique virtual identity ID_T that the user could use in virtual environments.

Thus, a user U sends a virtual identity creation message M(C(ID_T)) requesting an ID-token ID_T to be created to a trusted third-party platform TPP. The message M(C(ID_T)) comprises identity data like a name, a surname, a birth date...

The trusted third-party platform TTP verifies the identity data of the user by any means available in the art. Typically, the third party TTP requests official documents containing information on the real identity of the user. The third party is entitled to request and verifies this information. A physical check of an identity card in presence of the person can be performed or any other digital verification available on the market.

Then, after verification, the TTP selects parameters from the personal identity data of the user and calculates an ID-token ID_T from selected parameters. The third party TTP generates the virtual identity ID_T based on the list of selected parameters associated to the real identity of the person: for example, first name, last name, date of birth, place of birth, parents first names and last names. The unicity of the virtual identity ID_T at global level results from the combination of those parameters.

To guarantee the unicity of the ID-token ID_T across different virtual environments and blockchains, the generation of the ID-token is advantageously specified with a given list of parameters and cryptographic functions. Also Know-Your-Customer (KYC) technologies could bring value in the ID-token generation. KYC is used to create a unique ID-token per user from data that can itself be associated with one and only one user. Any means to determine a derivation standard common to all generations of ID-tokens and ensuring a single ID-token per user of the solution and per life may be used. Concretely, this translates into the need to recover a set of civil and biometric data to establish a user identification algorithm. From the set of civil and biometric data such a user identification algorithm is responsible for creating an information chain (DNA) which is transcribed into the ID-token in the form of a cryptographic chain linked to a wallet. Any existing means to perform such an operation can be used. For example, the ID-token is calculated as follows: ID-token = hash (first name | last name | date of birth | place of birth | parents first names and last names).

It is recommended to rely on reversible crypto function in order to enable the retrieval of the real identity of the user in case of issue.

Then, after generation of the ID-token, the third party TTP registers the ID-token in a blockchain that it has selected. Thus, the trusted third-party platform TTP triggers a transaction in a blockchain BC, said transaction including the ID-token ID_T and at least one of the selected parameters.

In parallel, once the ID-token is created, the TTP transfers ownership to the user's wallet. The TTP then records the creation of the ID-token C(ID_T) in a secure storage W enabling the user to manage the ID-token. The ID-token is proof of ownership of the data to which it is attached. In the invention, the ID-token must be unique and reflects the user who owns it. In this way it consists of two parts. Firstly, the ID-token is attached to a unique identifier which allows it to be linked to a single user. Secondly, the ID-token also has metadata which will contain the information necessary to verify the user's status on online platforms. Everything is then governed by a smart contract linked to the ID-token which defines it in its entirety.

The ID-token shall not have the property to be monetizable, once the information of its creation C(ID_T) has been transferred to the wallet W of the user. For this purpose, smart contracts define the behavior of the ID-token, the fact that it is not duplicable, transferable, or modifiable by anyone who is not trusted. This involves different steps.

First step is writing a smart contract that will represents the unique ID-token. This smart contract includes functions for transferring ownership and managing the ID-token's data.

Then, as a second step, the invention necessitates to deploy the smart contract on the blockchain. This blockchain must be compatible with a standard defining an ID-token of the invention.

The invention may be implemented using NFT like token. In such a case, an applicable standard will be ERC-721. This means that the invention can only use blockchains that are EVM (Ethereum Virtual Machine) compatible, thus working with or derived from Ethereum blockchain.

To deploy the smart contract so it is available for anyone to verify it, the sender/creator advantageously needs to pay a gas fee and use online platforms to be able to interact with the blockchain. The smart contract comprises a function to mint the unique ID-tokens. This function is called to create new ID-tokens and manage their quantity.

Then, to transfer ownership, a function needs to be implemented in the smart contract that allows the current ID-token owner to transfer ownership to another user. This function should verify that the caller is the next owner. The current owner, thus the sender, calls a "transfer ownership" function, providing the address of the new owner as an argument.

The new owner, i.e. the recipient, on his side must confirm the ownership transfer. This step is implemented to prevent accidental transfers. The new owner should call a specific function to accept ownership. Both the sender and recipient should have enough cryptocurrency, e.g., ETH on Ethereum, in their wallets to pay for gas fees associated with these transactions.

The ownership transfer is executed as a transaction on the blockchain. This involves sending the transaction with the necessary data and gas fees to the blockchain network. After the transaction is confirmed by the network, i.e. once the transaction is mined into a block, the ownership of the ID-token is transferred to the new owner.

It is then needed to update metadata information to reflect the new owner. After this final step both the previous owner and the new owner are notified about the successful ownership transfer for transparency and recordkeeping. Thus, accordingly, once the ID_T is created, the TTP transfers ownership to the user's wallet.

Figure 2 illustrates the registration to a virtual environment VE according to the invention. To register, a user uses a user device UD having access to a digital wallet W, where the creation C(ID_T) of the ID_T was stored. The user device UD thus connects to the virtual environment VE, of which the operator reads ID-token in the blockchain BC thanks to an associated smart contract linked to the creation C(ID_T) of the ID_T in the wallet W, whose functions and advantages have been detailed previously.

If the user has an injurious behavior in the virtual environment, then the user can be banished from the virtual environment by storing the ID-token in a blacklist. This blacklist can be shared between virtual environments. Here, for example, the operator maintains a banishment list of banished ID-tokens or has access to such a list managed by another operator and/or for another virtual environment in partnership. While consulting this list, the operator of the virtual environment VE thus determines whether the user has been banished. If the ID_T is in the banishment list, the registration to the virtual environment is refused. If the ID_T is not in the banishment list, the registration is granted.

As illustrated on figure 3, in order to keep a certain flexibility for the user, the ID-token ID_T is derivable in a multitude of secondary identifiers Av_n that allow to identify oneself on the different virtual environments, i.e., metaverses Meta, Game, or social networks Twitter.

The metadata contained in the ID-token is advantageously used to create N identifiers for the same user on the same platform. These metadata are intrinsically linked to the unique identifier of the ID-token created by the TTP. This derivation process makes it possible to have a unique real identity, represented by the ID-token, and N virtual identities, derived from the ID-token, which is the innovation brought by this patent.

Thus, once the registration is granted, the virtual environment operator advantageously derives DRV(ID_T) an avatar Av_n for the user in the specific virtual environment VE.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to create and manage a unique virtual identity, called ID-token, for a user, said ID-token being to be used to know a status of the user across different virtual environments managed by different operators where the user has diverse identifiers, said method comprising the steps of, for a trusted party:
- receiving personal identity data from the user;
- verifying said personal identity data;
- selecting parameters from the personal identity data of the user;
- calculating the ID-token from selected parameters, said ID-token being a proof of ownership of the data and having metadata necessary to verify the user's status on the different virtual environments;
- linking a unique identifier/virtual identity to the ID-token
- linking a smart contract to the ID-token to define the ID-token in its entirety as not duplicable, transferable, or modifiable by anyone who is not trusted, said smart contract comprising functions for transferring ownership and managing the ID-token's data;
- recording the ID-token and the smart contract as transactions in a blockchain relative to the creation of the ID-token, said blockchain being accessible to the different operators of virtual environments;
- transferring, in a user's secure storage having the ability to receive and store this information and to prove the ID-token ownership under request of authenticated operators thanks to a cryptographic scheme, an information on the creation of the ID-token linked to the blockchain transaction;
said method further comprising the steps of, for at least one operator of
a virtual environment:
- managing a banishment list of banished ID-tokens, said banishment list being shared by several virtual environments and/or shared with several operators of a virtual environment;
- receiving a request to register to the virtual environment from the user, said request comprising at least the information on the creation of the ID-token;
- using said information, reading the blockchain transaction;
- checking the presence of the read ID-token in the banishment list;
- authorizing or refusing the registration to the virtual environment accordingly.

2. Method according to claim 1, wherein the ID-token is specified with a given list of parameters and given cryptographic functions.

3. Method according to claim 1, wherein the secure storage is chosen among the followings: a pre-existing digital wallet of the user, a dedicated digital wallet created for the management of the ID-token, a user's secure area in the cloud.

4. Method according to one of claims 1 and 2, wherein the blockchain transaction further includes information for who, when and by who the ID-token was created.

5. Method according to one of preceding claims, wherein said calculation step implements a cryptographic function applied to the selected parameters.

6. Method according to one of preceding claims, wherein said calculation step is reversible enabling to retrieve the selected parameters.
